# EUROPÄISCHE PATENTSCHRIFT

(11) **EP 0 437 670 B1**
(45) Veröffentlichungstag und Bekanntmachung des Hinweises auf die Patenterteilung: **06.10.1993**
(21) Anmeldenummer: 90112808.2
(22) Anmeldetag: 05.07.1990
(51) Int. Cl.: C09K 3/10, E04G 23/02

(54) **Dichtungselement für Bauwerke**
Construction sealing element
Elément d'étanchéité utilisables dans la construction

(30) Priorität: 18.01.1990 DE 4001263
(43) Veröffentlichungstag der Anmeldung: 24.07.1991
(73) Patentinhaber: Pflieger, Rolf, 72135 Dettenhausen (DE)
(72) Erfinder: Pflieger-Harm, Lieselotte, D-7405 Dettenhausen (DE)
(74) Vertreter: Möbus, Rudolf, Dipl.-Ing.

(56) Entgegenhaltungen:
- EP-A- 0 160 448
- JAPANESE PATENT OFFICE, Tokyo, JP, FILE SUPPLIER JAPS; & JP-A-57 010 656 (ISAMU TORYO K.K.)
- WORLD PATENT INDEX, Nr. 75-L6952W [43], Derwent Publications Ltd, Londen, GB; & SU-A-446 425 (LENGD ENG. CONS. INST.)
- WORLD PATENT INDEX, Nr. 82-30807E [15], Derwent Publications Ltd, Londen, GB; & SU-A-842 137 (MINERAL SITE DRYING)

## Beschreibung

Die Erfindung betrifft ein Dichtungselement für Bauwerke, in Form eines flexiblen, in Wasser durch einen Betonitzusatz quellbaren Stranges.

Dichtungselemente aus einer wasserquellbaren Tonzusammensetzung sind in Form von Dichtungsleisten bekannt, in denen das Bentonit zusammen mit Kautschuk und anderen Stoffen gemischt ist, welche eine Formhaltigkeit der Dichtungsleiste gewährleisten, solange sie nicht der Feuchtigkeit ausgesetzt ist (EP-PS 160 448). Es ist auch bekannt, eine Kautschuk-Bentonit-Zusammensetzung auf einen passenden Träger aufzubringen und außen durch eine wasserdurchlässige Schicht abzudecken (EP-PS 50 906). Die Herstellung dieser bekannten Dichtungsleisten ist aufwendig, vor allem wegen der erforderlichen Kombination der normalerweise pulverigen Bentonitmasse mit anderen Bindungsstoffen. Ein weiterer Nachteil besteht darin, daß die bekannten Dichtungsleisten leicht Feuchtigkeit aus der Luft aufnehmen können, was ihre Lagerung sehr erschwert.

Der Erfindung liegt die Aufgabe zugrunde, ein Dichtungselement für Bauwerke der eingangs genannten Art preiswert und so herzustellen, daß eine teuere Kombination der Bentonitmasse mit eine elastische Form gebenden Zusatzstoffen vermieden werden kann.

Die gestellte Aufgabe wird mit einem Dichtungselement der eingangs genannten Art erfindungsgemäß dadurch gelöst, daß der Strang aus einer mit Bentonit gefüllten textilen Hülle besteht, die das Aufquellen des Bentonits durch Dehnbarkeit und/oder Öffnungen zwischen den die Hülle bildenden Textilfäden nicht behindert. Die textile Hülle kann beispielsweise aus einem Gestrickschlauch bestehen, der vorteilhafterweise aus verrottbaren Textilfäden oder -garnen gebildet sein kann.

Bei dem erfindungsgemäß ausgebildeten Dichtungselement wird die Strangform nicht durch dem Bentonit beigefügte Zusatzstoffe bewirkt, sondern durch die textile Hülle vorgegeben. In die textile Hülle kann das Bentonit in reiner Form körnig oder pulverförmig oder aber mit einfachen Zusatzstoffen kombiniert in Granulatform eingebracht sein. Sobald das Dichtungselement Wasser ausgesetzt wird, kann die aufquellende Bentonitmasse zwischen den die Hülle bildenden Textilfäden nach außen hindurchtreten. Es ist auch möglich, die textile Hülle so zu gestalten, daß sie unter dem Druck des aufquellenden Bentonitmaterials aufreißen kann.

Bei einer bevorzugten Ausführungsform des Dichtungselementes kann die textile Hülle mit einem wasserabweisenden Naturwachs imprägniert sein, das die Zwischenräume zwischen den Textilfäden ausfüllt, das aber durch den bekanntermaßen stark basisch wirkenden Beton lösbar ist. Die Naturwachsimprägnierung verhindert bei der Lagerung der Dichtungselemente einerseits den Austritt von Bentonitpulver durch die Textilhülle nach außen und anderseits das Eindringen von Feuchtigkeit von außen in die innere Bentonitmasse. Erst beim Einsetzen der Dichtungselemente in Betonfugen erfolgt eine Auflösung der Naturwachsimprägnierung, so daß Feuchtigkeit durch die Textilhülle eindringen und die Bentonitmasse zum Quellen bringen kann.

Die Dichtungselemente gemäß der Erfindung sind sowohl bezüglich der Materialzusammensetzung als auch ihrer Herstellung billig und haben außerdem den Vorteil, daß sie pro Raumeinheit einen größeren Anteil an quellbarer Bentonitmasse aufweisen, als dies bei den bekannten bentonithaltigen Dichtungselementen der Fall ist. Durch die erwähnte Naturwachsimprägnierung oder aber durch die Verwendung einer wasserdichten abziehbaren Schlauch- oder Rohrhülle läßt sich das Dichtungselement für den Transport oder für die Lagerung leicht gegen eine unerwünschte Feuchtigkeitsaufnahme schützen.

Nachfolgend wird ein Ausführungsbeispiel eines erfindungsgemäß ausgebildeten Dichtungselementes anhand der beiliegenden Zeichnung näher erläutert.

Es zeigen:
- Fig. 1: eine perspektivische Darstellung eines Abschnittes eines Dichtungsstranges;
- Fig. 2: einen stark vergrößerten Querschnitt durch einen Dichtungsstrang, wobei die linke und die rechte Hälfte des Querschnitts unterschiedliche Strangausführungsformen zeigen.

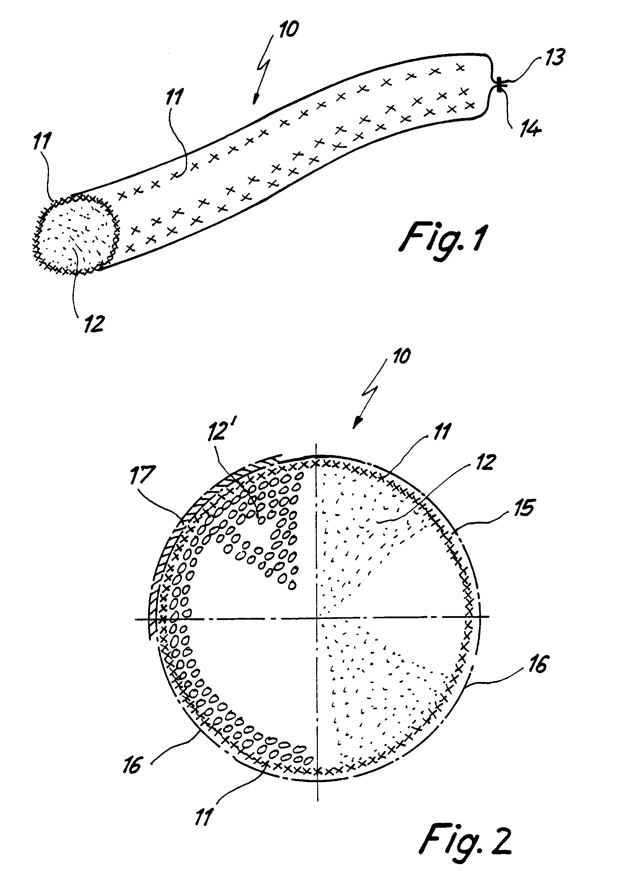

Der in Fig. 1 dargestellte Dichtungsstrang 10 besteht aus einem aus verrottbaren Baumwollfäden gefertigten, an der Schnittstelle mit Kreuzen dargestellten flexiblen und begrenzt dehnbaren Gestrickschlauch 11, der mit Bentonitmasse 12 gefüllt ist. An seinen Enden ist der Gestrickschlauch 12 ähnlich einer Wurst zu einem Schlauchzipfel 13 gerafft und mittels einer Klammer 14 verschlossen. Die Bentonitmasse 12 kann das Bentonit entweder in reiner Form oder mit einfachen Zusatzstoffen, welche das Einbringen der Masse in die Textilhülle erleichtern oder einen Zusammenhalt der Bentonitmasse in der Textilhülle begünstigen, enthalten.

In der vergrößerten Schnittdarstellung der Fig. 2 ist der Gestrickschlauch 11 wieder durch Kreuze gekennzeichnet. Bei der aus der rechten Schnitthälfte ersichtlichen Ausführungsform ist die Bentonitmasse 12 als Bentonitpulver eingebracht. Der Gestrickschlauch 11 ist mit einem Naturwachs imprägniert, das eine die Zwischenräume zwischen den das Gestrick bildenden Fäden oder Garnen bestehende Zwischenräume verschließende Schicht 15 bildet, die in der Zeichnung durch eine durch die Kreuze hindurchgeführte Kreisbogenlinie angedeutet ist.

Bei der in der linken Hälfte des Schnittbildes der Fig. 2 gezeigten Ausführungsform besteht die Bentonitmasse 12' aus einem Bentonitgranulat, wobei die Größe der einzelnen Granulatkörner so gewählt ist, daß sie nicht durch die Maschen des Gestrickschlauches 11 ausfallen können. Zur Lagerung und zum Transport ist der Dichtungsstrang von einer wasserundurchlässigen, abziehbaren Kunststoffolie 16 umschlossen, die als Folienschlauch ausgebildet sein kann und im Schnittbild der Fig. 2 durch eine strichpunktierte Linie angedeutet ist. Anstelle einer solchen flexiblen Schutzhülle kann auch ein eigensteifes wasserundurchlässiges Rohr 17 als wiederverwendbare Schutzhülle vorgesehen werden, wie im linken oberen Teil des Schnittbildes angedeutet ist. In ein solches eigensteifes Schutzrohr kann der Dichtungsstrang 10 leicht eingeschoben und vor Gebrauch wieder leicht herausgezogen werden.

## Patentansprüche

1. Dichtungselement für Bauwerke, in Form eines flexiblen, in Wasser durch einen Bentonitzusatz quellbaren Stranges, dadurch gekennzeichnet, daß der Strang (10) aus einer mit Bentonit (12, 12') gefüllten textilen Hülle (11) besteht, die das Aufquellen des Bentonits durch Dehnbarkeit und/oder Öffnungen zwischen den die Hülle (11) bildenden Textilfäden nicht behindert.

2. Dichtungselement nach Anspruch 1, dadurch gekennzeichnet, daß die textile Hülle (11) mindestens teilweise aus verrottbaren Textilfäden oder -garnen gebildet ist.

3. Dichtungselement nach Anspruch 1 oder 2, dadurch gekennzeichnet, daß die textile Hülle (11) aus einem Gestrickschlauch besteht.

4. Dichtungselement nach einem der Ansprüche 1 bis 3, dadurch gekennzeichnet, daß die textile Hülle (11) mit einem wasserabweisenden Naturwachs (15) imprägniert ist, das durch den basisch wirkenden Beton lösbar ist.

5. Dichtungselement nach einem der Ansprüche 1 bis 4, dadurch gekennzeichnet, daß der Strang (10) zum Transport von einer wasserdichten abziehbaren Schlauch- oder Rohrhülle (16, 17) umgeben ist.

## Claims

1. A sealing element for buildings in the form of a flexible rope or string which swells in water due to the addition of bentonite, characterised in that the rope or string (10) consists of a textile cladding (11) which is filled with bentonite (12, 12') and which does not impede the swelling of the bentonite, due to its extensibility and/or due to apertures between the textile fibres forming the cladding (11).

2. A sealing element according to claim 1, characterised in that the textile cladding (11) is at least partially formed from degradable textile fibres or yarn.

3. A sealing element according to claim 1 or 2, characterised in that the textile cladding (11) consists of a flexible knitted fabric tube.

4. A sealing element according to any one of claims 1 to 3, characterised in that the textile cladding (11) is impregnated with a water-repellent natural wax (15) which is soluble due to the concrete acting as a base.

5. A sealing element according to any one of claims 1 to 4, characterised in that the rope or string (10) is surrounded by a removable water-tight rigid or flexible covering (16, 17) for transport.

## Revendications

1. Elément d'étanchéité pour la construction, sous forme d'un écheveau flexible gonflable dans l'eau par un additif de bentonite, caractérisé en ce que l'écheveau (10) est constitué d'une gaine textile (11) remplie de bentonite (12, 12') qui n'empêche pas le gonflement de la bentonite par expansion et/ou des ouvertures entre les fils textiles formant la gaine textile (11).

2. Element d'étanchéité selon la revendication 1, caractérisé en ce que la gaine textile (11) est formée au moins partiellement de fibres ou de fils textiles pourrissables.

3. Element d'étanchéité selon la revendication 1 ou 2, caractérisé en ce que la gaine textile (11) est constituée d'un tuyau en tricot.

4. Element d'étanchéité selon l'une des revendications 1 à 3, caractérisé en ce que la gaine textile (11) est imprégnée d'une cire naturelle hydrofuge (15) qui est soluble par le béton agissant comme base.

5. Element d'étanchéité selon l'une des revendications 1 à 4, caractérisé en ce que l'écheveau (10) est entouré pour le transport d'une gaine en tube ou en tuyau souple étanche à l'eau amovible (16, 17).
